# EUROPEAN PATENT SPECIFICATION

(11) **EP 3 243 555 B1**
(45) Date of publication and mention of the grant of the patent: **13.11.2019**
(21) Application number: 17167694.3
(22) Date of filing: 24.04.2017
(51) Int. Cl.: A63B 71/00, F16F 1/18, F16F 1/26, A63B 71/02, A63B 5/11, E04B 1/24, A63B 21/02

(54) **SPRING ENCLOSED TRAMPOLINE**
TRAMPOLIN MIT FEDEREINFASSUNG
TRAMPOLINE À ENCEINTE À RESORTS

(30) Priority: 09.05.2016 US 201662333732 P; 30.12.2016 CN 201621476086 U; 21.02.2017 US 201715438532
(43) Date of publication of application: 15.11.2017
(73) Proprietor: Sportspower, Ltd., Hong Kong (CN)
(72) Inventor: Chen, Samuel, Hong Kong (CN)
(74) Representative: Hellmich, Wolfgang

(56) References cited:
- WO-A1-2015/074097
- US-A- 2 315 414
- US-B2- 7 468 020

## Description

### FIELD OF THE INVENTION

The present invention is in the field of trampoline enclosures.

### DISCUSSION OF RELATED ART

Trampoline is a popular sport and recently enclosures have been developed for retaining users such as children within the jumping area. The trampoline enclosure is typically supported by trampoline poles that hold up a trampoline enclosure support. Trampoline enclosure supports have been framed from fiberglass rods, such as plastic wrapped fiberglass rods. Additionally, trampoline wires have provided for both substantially inflexible supports and substantially flexible supports. An inflexible support has improved strength for retaining a user, but a flexible support has improved safety when a user contacts the enclosure support during a jump. The enclosure of the trampoline can also be hung loosely on upright poles with the enclosure netting between the poles hanging naturally.

The trampoline support frame can be furnished with a substantially rigid mesh net support to provide a stronger support, but this can make assembly more difficult. Users sometimes require tools and keeping track of small components such as screws. Having long rods also makes the assembly more difficult.

WO 2015/074097 A1 discloses recreational trampolines. The trampoline has legs which support leaf springs. A mat is directly suspended by upper stainless steel cables and lower stainless steel cables. The upper edge of a safety net is formed by a connecting strap or cable. Neither an upper tubular ring nor a lower tubular ring directly support the mat.

### SUMMARY OF THE INVENTION

The present invention concerns a spring enclosure trampoline as claimed in claim 1. An object of the present invention is to provide a spring connection between trampoline enclosure poles to improve dynamic catching of users that fall onto trampoline enclosure netting while at the same time providing a flexible support in case a user contacts the enclosure support during a jump.

A spring enclosure trampoline includes a trampoline bed connected across a horizontal frame member. The trampoline bed is supported by a plurality of springs. Trampoline legs support the horizontal frame member above a ground surface. A trampoline enclosure supports a trampoline enclosure net from a spring enclosure netting support. The trampoline enclosure surrounds the trampoline bed and the trampoline enclosure is supported on a trampoline pole. The spring enclosure netting support is formed as a leaf spring. The leaf spring is flexible in a horizontal direction and in a vertical direction. A leaf spring vertical dimension is greater than the leaf spring horizontal dimension. A horizontal spring constant of the leaf spring, and a vertical spring constant of the leaf spring are different.

The horizontal spring constant is less than the vertical spring constant so that the leaf spring is resiliently flexible in a vertical direction and in a horizontal direction, but is more stiff in a vertical direction. An enclosure sleeve of the trampoline enclosure supports the trampoline enclosure net, which is suspended from the enclosure sleeve.

Preferably, the leaf spring is formed from multiple sections connected together at a leaf spring connector. The leaf spring has a pair of leaf spring openings that receive bolts secured by nuts. The pair of leaf spring openings can include a leaf spring first opening and a leaf spring second opening. The leaf spring has a leaf spring cover fitted over at least an upper edge of the leaf spring. The leaf spring retainer can be attached to the trampoline pole. The leaf spring retainer has a retainer slot that clips the leaf spring to limit rotation of the leaf spring within the retainer slot. The spring enclosure trampoline may also have a leaf spring cover laminated over at least a portion of the leaf spring.

A leaf spring can also have an adjacent leaf spring. Each leaf spring would have a pair of adjacent leaf springs. An adjacent leaf spring has a head and an end. The end can be fitted with a connecting sleeve. The connecting sleeve preferably has a buckle that can be used as a snap buckle for snap fit connection without tools. The buckle secures the leaf spring to the adjacent leaf spring. The buckle has a pair of clamping parts, including an upper clamping part and a lower clamping part. The pair of clamping parts engages a pair of grooves formed on a head portion of the adjacent leaf spring, and the upper clamping part engages an upper groove. The lower clamping part engages a lower groove. The connecting sleeve is connected to the end of the adjacent leaf spring by a bolt or screw. The leaf spring also has a pair of bevels formed on the end of the leaf spring. The bevels are configured to expand the buckle when the pair of bevels is inserted through the buckle. The buckle is formed as a wire clip.

### BRIEF DESCRIPTION OF THE DRAWINGS

Figure 1 is an environmental perspective view of a trampoline.
Figure 2 is a cross-section view of the trampoline frame, springs and trampoline pad connection.
Figure 3 is a close-up view of a spring enclosure netting support showing a connection between different sections of the leaf spring.
Figure 4 is a cross-section view of a first leaf spring section and a second leaf spring section bolted together inside a plastic connector.
Figure 5 is a cross-section view of the enclosure sleeve fitting over the leaf spring.
Figure 6 is an exploded view of the present invention showing construction of the leaf spring.
Figure 7 is a diagram of the present trampoline enclosure device installed on a trampoline.
Figure 8 is a partial exploded view of two mesh connecting units.
Figure 9 another partial exploded view of the mesh connection units.
Figure 10 is a partial section view of the mesh connecting unit.
Figure 11 is another partial exploded view of the mesh connection units.
Figure 12 is a side view of the leaf spring retainer.
Figure 13 is a front perspective view of the leaf spring retainer.
Figure 14 is a connection view of the leaf spring retainer.

### DETAILED DESCRIPTION OF THE PREFERRED EMBODIMENT

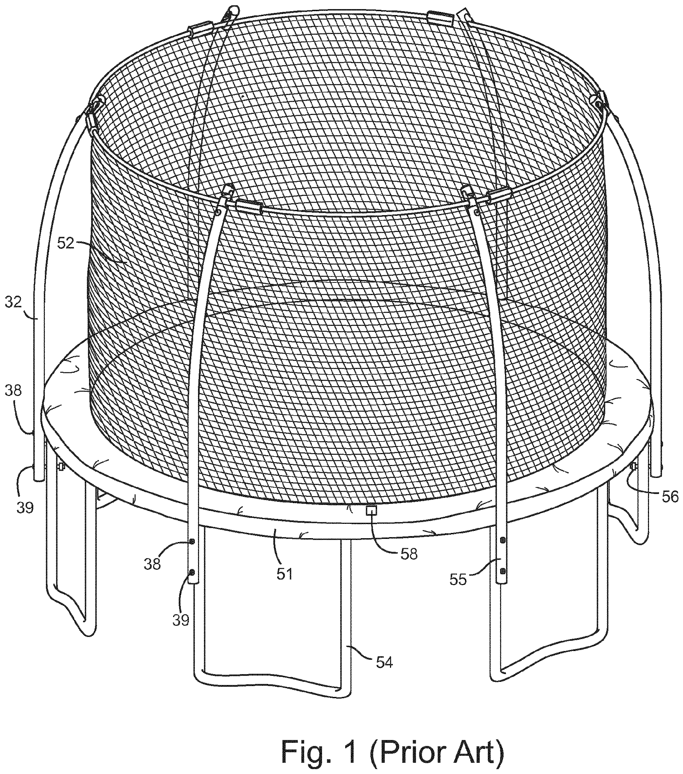

As seen in Fig. 1, a trampoline generally has a trampoline frame 51 having a ring of horizontal members. The trampoline frame 51 is connected to multiple trampoline legs 54. The trampoline legs 54 are U-shaped and connected to the trampoline frame 51 to support the trampoline frame 51 above the ground. The trampoline legs have enclosure poles 32 connected to them. The enclosure poles 32 are connected to the trampoline legs at an enclosure pole connection 55. The enclosure pole connection 55 includes a first enclosure pole connector 38 and a second enclosure pole connector 39 which can be formed of a screw or bolt for example. The enclosure pole connection nut 56 can thread to the enclosure pole connectors when the enclosure pole connectors are formed as bolts. The enclosure poles 32 support an upper enclosure support 53. The upper enclosure support 53 has a net 52 suspended from the upper enclosure support. The net 52 retains users bounding on the trampoline bed. The trampoline bed is connected to the trampoline frame 51 at a plurality of springs that are covered by spring cover 58. The trampoline enclosure surrounds the trampoline bed along a circumferential periphery and has a top portion open.

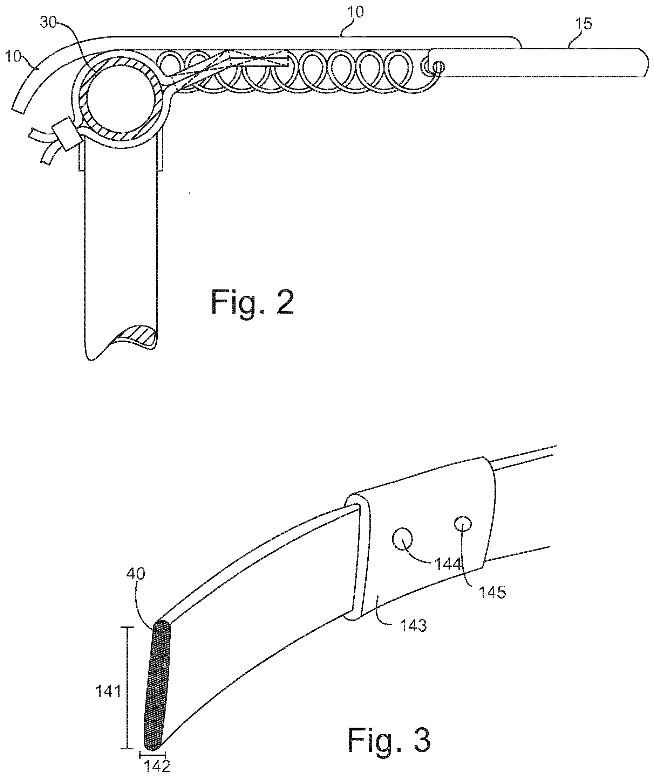

As seen in Fig. 2, the trampoline frame supports the bed 15, pad 10, springs and user. The trampoline frame is commonly circular when seen from a top plan configuration and made of horizontal tubular members, having a number of vertical support legs attached to the horizontal tubular members. The trampoline frame can also be rectangular. The trampoline frame retains a plurality of springs that in turn retain the trampoline surface. The trampoline frame is formed of vertical members and horizontal members 30. The vertical and horizontal members 30 travel around the periphery of the trampoline bed 15. Horizontal members 30 are supported by vertical members. The horizontal members connect to vertical members at a T joint connector provided for interconnecting adjacent ends of each top member section. The vertical members support the T joint connectors.

As seen in Fig. 3, the trampoline enclosure has an upper enclosure support 53 that can be formed as a spring enclosure netting support 40. The spring enclosure netting support 40 is formed as one or more leaf springs connected to each other in a circular or oval shape. The leaf spring has a vertical dimension 141 and a horizontal dimension 142. The vertical dimension is greater than the horizontal dimension. Preferably, the vertical dimension or height of the leaf spring is about 10-12 mm while the horizontal dimension is about 1-2 millimeters. The spring enclosure netting support is held within a sleeve of the enclosure net that conforms to the circular or oval shape of the leaf spring when seen from the top view.

Although described as a leaf spring, the spring can also be described as a plate spring. The leaf spring has a pair of ends such as a first end and a second end.

When only a single leaf spring is used, the single leaf spring can have the first end connected to the second end to form a loop such as a circular or oval shaped loop.

The leaf spring can be connected by a leaf spring connector 143 such as a clamp. The clamp can have a pair of set screws or securing connectors that pass through a surface of the leaf spring. The leaf spring first end and the leaf spring second end can both have an opening for receiving a pair of bolt connectors. The leaf spring can have a leaf spring first opening 144 adjacent to a leaf spring second opening 145. The leaf spring first opening 144 and the leaf spring second opening 145 are preferably parallel to each other along a median line of the leaf spring. The leaf spring can be formed in sections such as in four sections.

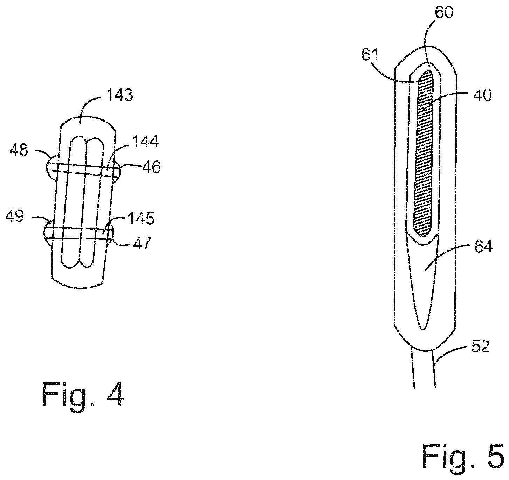

As seen in Fig. 4, the first bolt 46 can insert through the leaf spring first opening 144 and the second bolt 47 can insert through the leaf spring second opening 145. The first nut 48 connects to the first bolt 46 and the second nut 49 connects to the second bolt 47. The leaf spring also has a leaf spring cover 60. The leaf spring cover is preferably made of a plastic sheathing that covers the leaf spring along its periphery. The plastic sheathing can be made as a polypropylene tubing that has either a circular cross-section or a cross-section that conforms to the flat leaf spring shape.

The leaf spring is substantially flexible along its entire length and provides support to the trampoline poles 32 to interconnect the trampoline poles 32 at upper ends of the trampoline poles. The upper ends of the trampoline poles 32 are flexibly interconnected to each other while remaining not free. From a top view, the flat leaf spring forms a leaf spring ring.

The leaf spring responds differently when receiving bias from a horizontal direction as compared to receiving bias from a vertical position. During regular jumping, the spring enclosure netting support 40 resiliently attenuates frame vibrations and can dampen cyclical stress between the upper ends of the trampoline enclosure poles 32. When a user lands on the enclosure net, the leaf spring flexes to catch the user. Because the leaf spring is connected to all of the trampoline poles at the upper ends of the trampoline poles, the leaf spring flexes to change the shape of its profile. The leaf spring receives a force in a downward direction causing the leaf spring to buckle.

The leaf spring has a first spring constant in the horizontal direction, also called a horizontal direction spring constant. The leaf spring also has a second spring constant in the vertical direction, also called a vertical direction spring constant. The spring constant in the horizontal direction is less than the spring constant in the vertical direction.

After the trampoline enclosure catches the user, the user preferably does not contact the ground. The sleeve of the trampoline enclosure net preferably at least partially bears the weight of the user and preferably prevents the user from contacting the ground. The leaf spring flexibly restores the shape of the enclosure net to the original neutral position after the user is no longer biasing the trampoline enclosure net.

Optionally, as seen in Fig. 5, the leaf spring is encapsulated within a laminate such as a plastic sheath formed as the leaf spring cover 60. The leaf spring cover 60 can be a high density plastic tube such as a polyethylene tube. The leaf spring cover 60 can be thermally laminated to the metal of the leaf spring with a tacky polyolefin film that acts as a double-sided adhesive tape when heated. The tacky film 61 can be introduced at an interface between the leaf spring cover 60 and the spring enclosure netting support 40. The leaf spring has a flat surface that can receive a strip of tacky film 61 on an inside and outside surface of the leaf spring. The tacky film 61 can retain the enclosure sleeve 64 to the leaf spring cover 60.

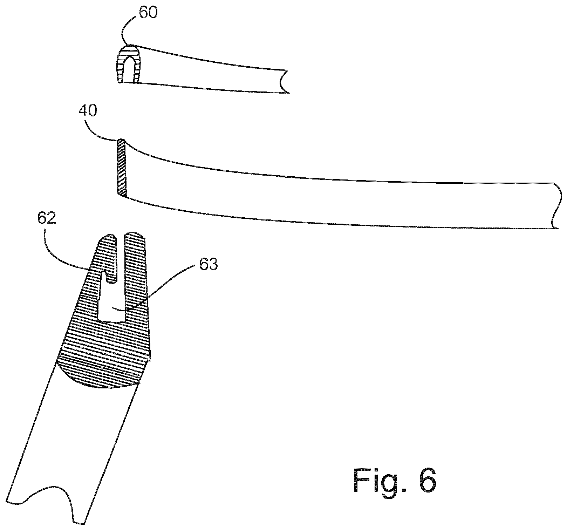

As seen in Fig. 6, a leaf spring retainer 62 can have a retainer slot 63. The retainer slot 63 has a variety of features for capturing and retaining the leaf spring hoop. When inserted into the retainer slot 63, the leaf spring maintains a generally vertical orientation, although the leaf spring does bend to accommodate the retainer slot 63. In neutral position, the leaf spring would be completely vertical, but the leaf spring being a spring can be biased for purposes of insertion. The retainer slot 63 generally includes a retainer dome 20 defined above a retainer dome rim 21. The retainer dome rim 21 extends downwardly along a cylindrical retainer sidewall 26.

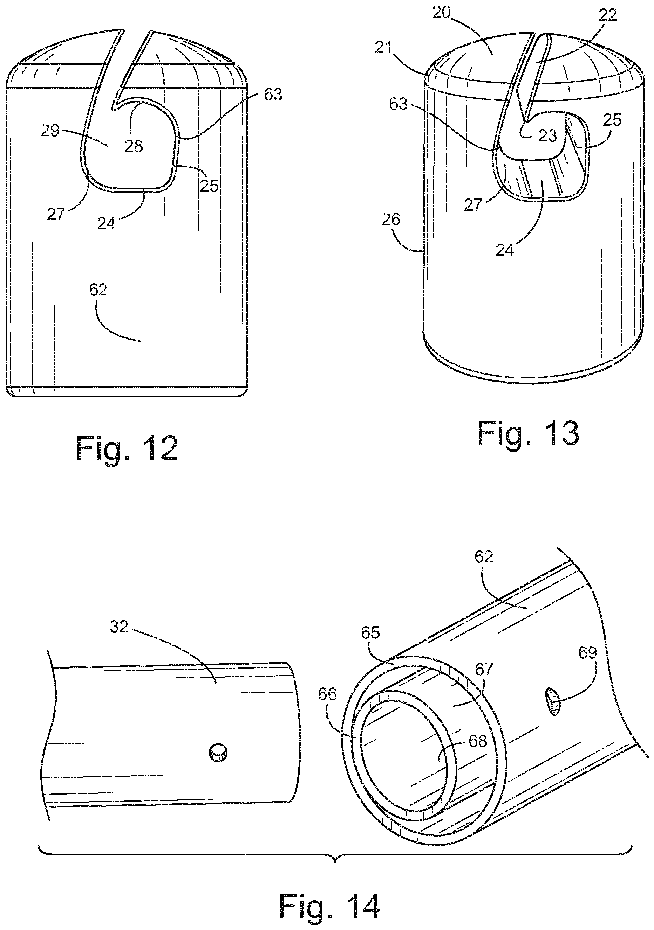

As seen in Figs. 12-14, the retainer slot 63 generally includes a capturing cavity 29 and the angled slot 22. The retainer dome 20 has an angled slot 22 cut at an apex of the retainer dome 20. The angled slot has a pair of faces for receiving the leaf spring. The angled slot 22 extends to the capturing cavity 29. The angled slot 22 defines an angled slot hook 23 and a capturing cavity arched ceiling 28. The leaf spring is captured into the capturing cavity 29 when inserted. During insertion, the capturing cavity angled slot slope 27 biases the leaf spring into the capturing cavity 29 so that the leaf spring passes the angled slot hook 23 to be retained within the capturing cavity 29. To provide leeway or a loose enough fit to allow easy insertion of the leaf spring into all of the leaf spring retainers 62, the capturing cavity preferably includes a capturing cavity flat lower face 24 and a capturing cavity flat inside face 25.

The retainer slot 63 can be formed on a plastic upper endcap covering an upper end of the trampoline enclosure pole 32. The leaf spring retainer can be formed with an leaf spring retainer outside tube 65 and a leaf spring retainer inside tube 66 inside the leaf spring retainer outside tube 65. The leaf spring retainer 62 has a leaf spring retainer tube gap 67. The leaf spring retainer inside tube 66 can have a leaf spring retainer inside tube hollow 68. The leaf spring retainer connector opening 69 on the leaf spring retainer 62 extends through the trampoline enclosure pole 32 and can receive a screw or bolt for securing to the trampoline enclosure pole 32.

The leaf spring retainer can be formed of high density polyethylene with an ultraviolet inhibitor. The leaf spring retainer prevents rotation of the leaf spring and maintains the leaf spring in a vertically oriented position where the vertical height is greater than a horizontal width.

The sections of the leaf spring 41 can be connected together to form a single leaf spring in a long strip. The connection between the sections can be made in a quick connection configuration without needing bolts and nuts. The quick connection connector can be used with or without nuts and bolts. The quick connection connector could include additional safety locking mechanisms such as connectors.

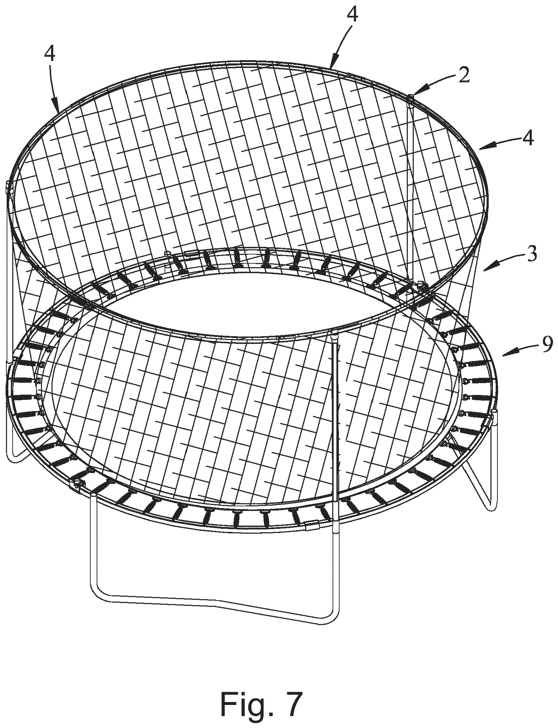

As is shown in Fig. 7, the trampoline 9 generally includes a support frame 2, an enclosure 3 and multiple mesh connecting units 4. The mesh connecting units 4 can be formed as leaf springs 41. The mesh connecting units 4 support the mesh which can be formed as a thin or thick weave or double layer net for retaining users within the bounding area above the trampoline bed. The weave of the mesh may have a variety of different configurations such as hexagonal or quadrilateral orientations.

The support frame 2 is equipped on the trampoline 9, and extends upwardly from the trampoline 9 via trampoline enclosure support poles. The enclosure 3 is used to enclose the space above the trampoline 9 to prevent users such as children from falling out of the trampoline 9. The mesh connecting units 4 can be detachably connected to each other in a ring shape, and are mounted on the top of the support frame 2 as part of this enclosure 3 and naturally hang. Each mesh connecting unit 4 may have a leaf spring 41, a connecting sleeve 42, a buckle 43 equipped in this connecting sleeve 42 and a screw 44.

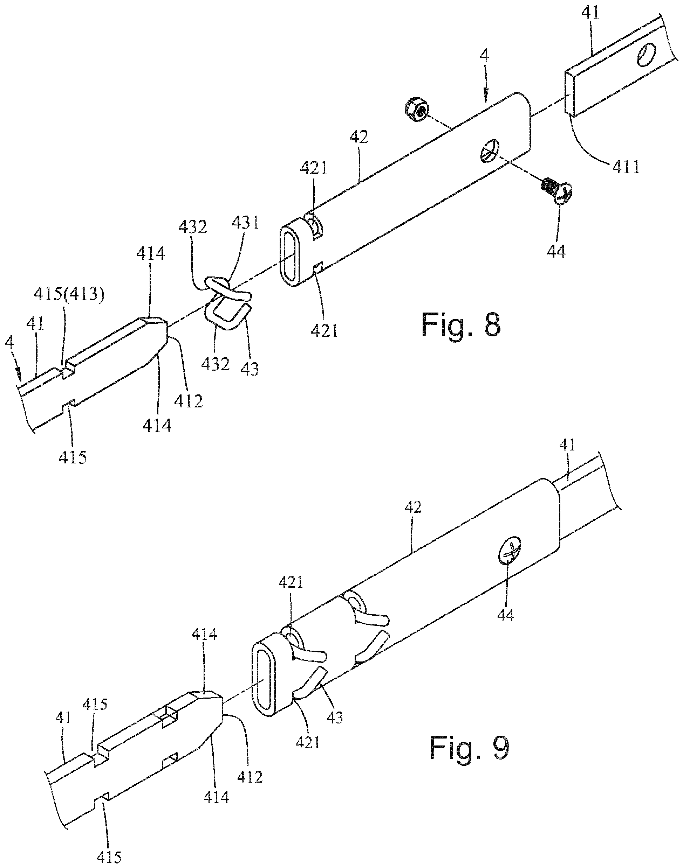

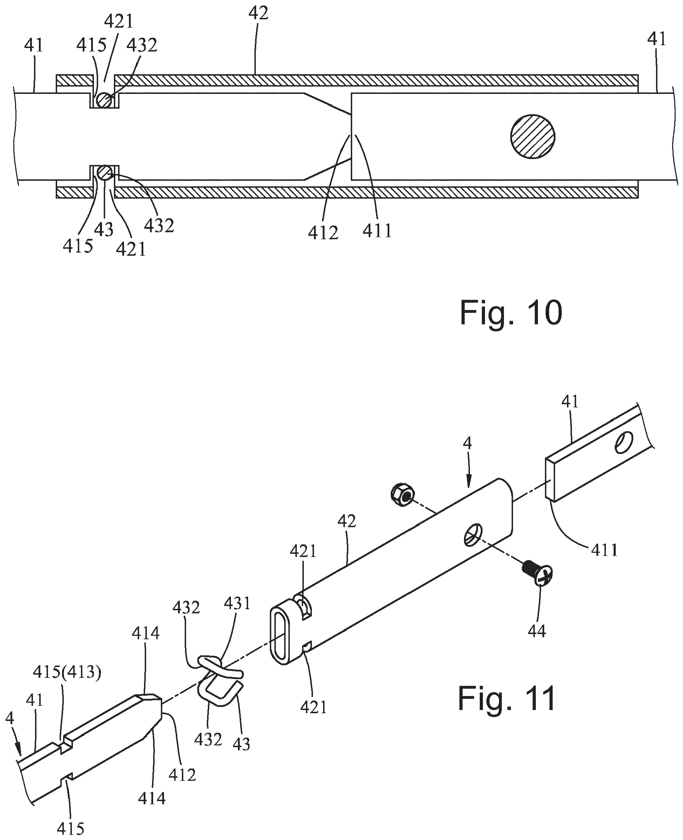

As seen in Figs. 8-11, each leaf spring 41 is preferably an elongated strip of galvanized steel having a flat cross-section. When the leaf spring 41 is mounted on the support frame 2, its height in the vertical direction should be greater than its thickness in the horizontal direction as previously described above. The leaf spring 41 also includes a head 411 as part of the connecting sleeve 42 and an end 412 opposite to the head 411. A buckling part 413 of the leaf spring is adjacent to the end 412. The connecting sleeve 42 of a consecutive mesh connecting unit 4 can be detachably buckled via the buckle clip 43 of the consecutive mesh connecting unit 4 at the two guide bevels 414. The buckling part 413 of each leaf spring 41 has two grooves 415 which can receive and be retained by the clamping part 432 on the two opposite sides.

The base 431 is formed as a spring such as a torsion spring or a clip spring that is biased to a pinching configuration where the upper and lower clamping part 432 are biased toward each other. The upper and lower clamping part 432 engage into the threading slots 421 which limit their motion. The guide bevels 414 are respectively formed in two sides of the end 412 and progressively converge and angle towards the end 412. The guide bevels 414 provide an engagement surface against the clamping parts 432 that spreads them apart from each other. The base 431 of the buckle clip 43 can be attached to the connecting sleeve 42. Each connecting sleeve 42 forms two threading slots 421 as grooves 415 for respectively receiving the clamping parts 432.

Each leaf spring 41 may additional pairs of grooves 415, such as one, two, three or more. Correspondingly, the connecting sleeve 42 would also include corresponding threading slots 421 for receiving additional clips. Increasing the number of the threading slots 412 and the grooves 415 distributes stress more evenly and provides stronger engagement. The number and mounting positions can be determined based on design and need not be restricted. The buckle clip 43 includes a base 431 and two clamping parts 432 which respectively extend from both sides of the base 431. The clamping parts 432 are respectively equipped in the threading slots 421 and can be detachably buckled to the grooves 415.

A screw 44 can be used instead of a first bolt 46 or a second bolt 47. The screw 44 can be replaced by a rivet for example. A screw 44 can be used to fix the head 411 of the leaf spring 41 and its corresponding connecting sleeve 42. Each mesh connecting unit 4 can be partially assembled in advance in the factory for user to assemble. The head 411 of the leaf spring 41 is screw-fastened with the described connecting sleeve 42 with the screw 44, and the buckle clip 43 can be installed in the threading slot 421 before the device is shipped. When users receive the product and want to assemble the product, they simply need to insert the head 412 of each leaf spring 41 to the other end of the connecting sleeve 42. Then the guide bevels 414 will push outwardly against the two clamping parts 432 of the buckle 43 so that the leaf spring 41 clicks into place when the clamping parts 432 clamp the groove 415. In this way, users can have a snap together quick set up of the mesh connecting unit 4.

Because users can assemble the mesh connecting unit 4 without tools, the assembly time is decreased. When users finish using the trampoline enclosure device and need to disassemble it, they only need to use needle nose pliers to separate the two clamping parts 432 of the buckle clip 43. Then, the buckle clip 43 disengages and a user can detach the end 412 of the leaf spring 41 from the connecting sleeve 42. Therefore, this assembly is also fast and simple. If users lack needle nose pliers, they can also remove the screw 44 with a screwdriver since the head 411 of the leaf spring 41 is connected to the connecting sleeve 42 with the screw 44. Therefore, the trampoline enclosure device also provides an alternative to disassembly.

The key features of the present invention can be summarized as follows. First, through the leaf spring 41, the connecting sleeve 42 and the buckle 43 and the buckling part 413 of the leaf spring 41 to which the buckle 43 can be detachably buckled. During installation, users only need to insert the leaf spring 41 into this connecting sleeve 42 in order to complete the assembly. Hence, the users can assemble the mesh connecting unit 4 without any tool. Compared with the prior art, the present embodiment can increase the assembling speed. Furthermore, since no small components are needed during the assembly, the present invention is different from the prior art in which assembly might not be completed due to the loss of small components. Second, since each leaf spring 41 is equipped with the groove 415 and the corresponding threading slot 412 is mounted in each connecting sleeve 42, and the buckle 43 can be buckled in a simple framework, the production process is simpler and the production costs are lower and the durability and service life is greater. Third, since the height of each leaf spring 41 in the vertical direction is greater than its thickness in the horizontal direction, the structural strength of the leaf spring 41 in the vertical direction is increased without being too stiff. Fourth, by fastening the head 411 of the leaf spring 41 and the connecting sleeve 42 via the screw 44, users, aside from dissembling with pliers, can also use a screwdriver. Fifth, the guide bevels 414 allow the leaf spring 41 to more easily slide into the connecting sleeve 42 to provide a snap fit.

### Call out list of elements

2 Support frame
3 Enclosure
4 Mesh Connecting Unit
9 Trampoline
10 Pad
15 Bed
20 Retainer Dome
21 Retainer Dome Rim
22 Angled Slot
23 Angled Slot Hook
24 Capturing Cavity Flat Lower Face
25 Capturing Cavity Flat Inside Face
26 Retainer Sidewall
27 Capturing Cavity Angled Slot Slope
28 Capturing Cavity Arched Ceiling
29 Capturing Cavity
30 Horizontal Frame Member
32 Enclosure Poles
38 First Enclosure Pole Connector
39 Second Enclosure Pole Connector
40 Spring Enclosure Netting Support
41 Leaf Spring
42 Connecting sleeve
43 Buckle
44 Screw
46 First Bolt
47 Second Bolt
48 First Nut
49 Second Nut
51 Trampoline Frame
52 Net
53 Upper Enclosure Support
54 Trampoline Leg
55 Enclosure Pole Connection
56 Enclosure Pole Connection Nut
58 Spring Cover
60 Leaf Spring Cover
61 Tacky Film
62 Leaf Spring Retainer
63 Retainer Slot
64 Enclosure Sleeve
65 Leaf Spring Retainer Outside Tube
66 Leaf Spring Retainer Inside Tube
67 Leaf Spring Retainer Tube Gap
68 Leaf Spring Retainer Inside Tube Hollow
69 Leaf Spring Retainer Connector Opening
141 Leaf Spring Vertical Dimension
142 Leaf Spring Horizontal Dimension
143 Leaf Spring Connector
144 Leaf Spring First Opening
145 Leaf Spring Second Opening
411 Head
412 End
413 Buckling part
414 Guide bevel
415 Groove
421 Threading slot
431 Base
432 Clamping part

## Claims

1. A spring enclosure trampoline (9) comprising:
a. a trampoline bed (15) connected across a horizontal frame member (30), wherein the trampoline bed (15) is supported by a plurality of springs;
b. trampoline legs (54) supporting the horizontal frame member (30) above a ground surface;
c. a trampoline enclosure (3) surrounding the trampoline bed (15) and having a spring enclosure netting support (40); a trampoline enclosure net (52) is supported from the spring enclosure netting support (40), wherein the spring enclosure netting support (40) is formed as a leaf spring (41) providing support to trampoline poles (32) to interconnect the trampoline poles (32) at upper ends of the trampoline poles, wherein the leaf spring (41) is flexible in a horizontal direction and in a vertical direction, wherein a leaf spring vertical dimension (141) is greater than a leaf spring horizontal dimension (142), wherein the leaf spring (41) is formed as an elongated strip; and
d. an enclosure sleeve (64) of the trampoline enclosure (3), wherein the trampoline enclosure net (52) is suspended from the enclosure sleeve (64).

2. The spring enclosure trampoline (9) of claim 1, wherein the leaf spring (41) is formed from multiple sections connected together at a leaf spring connector (143).

3. The spring enclosure trampoline (9) of claim 1 or 2, wherein the leaf spring (41) has a pair of leaf spring (41) openings that receive bolts, wherein the pair of leaf spring (41) openings includes a leaf spring first opening (144) and a leaf spring second opening (145).

4. The spring enclosure trampoline (9) of one of the previous claims, wherein the leaf spring (41) has a leaf spring cover (60) fitted over at least an upper edge of the leaf spring (41).

5. The spring enclosure trampoline (9) of one of the previous claims, further including a leaf spring retainer (62) attached to one of the trampoline poles (32), wherein the leaf spring retainer (62) has a retainer slot (63) that clips the leaf spring (41) to limit rotation of the leaf spring (41) within the retainer slot (63).

6. The spring enclosure trampoline (9) of one of the claims 1 to 3 and 5, further including a leaf spring cover (60) laminated over at least a portion of the leaf spring (41).

7. The spring enclosure trampoline (9) of one of the previous claims, further including an adjacent leaf spring, wherein the leaf spring (41) has a head (411) and the adjacent leaf spring has an end (412), wherein the end (412) has a connecting sleeve (42), wherein the connecting sleeve (42) has a buckle (43), the connecting sleeve (42) for detachably buckling via the buckle (43) to the adjacent leaf spring.

8. The spring enclosure trampoline (9) of claim 7, wherein the buckle (43) is formed as a wire clip.

9. The spring enclosure trampoline (9) of claims 7 to 8, wherein the buckle (43) has a pair of clamping parts (432), including an upper clamping part and a lower clamping part, wherein the pair of clamping parts (432) engages a pair of grooves (415) formed on a head (411) portion of the adjacent leaf spring, wherein the upper clamping part (432) engages an upper groove (415), and wherein the lower clamping part (432) engages a lower groove (415).

10. The spring enclosure trampoline (9) of claims 7 to 9, wherein the connecting sleeve (42) is connected to the end (412) of the adjacent leaf spring by a bolt or screw (44).

11. The spring enclosure trampoline (9) of claims 7 to 10, wherein the leaf spring (41) also includes a pair of bevels formed on the end (412) of the leaf spring (41), wherein the bevels are configured to expand the buckle (43) when the pair of bevels is inserted through the buckle (43).

## Patentansprüche

1. Ein Trampolin mit Federeinfassung (9), umfassend
a. ein Trampolinbett (15), das über einen horizontales Rahmenteil (30) verbunden ist, wobei das Trampolinbett (15) durch eine Vielzahl von Federn getragen wird;
b. Trampolinbeine (54), die das horizontale Rahmenteil (39) über der Bodenfläche trägt;
c. eine Trampolineinfassung (3), die das Trampolinbett (15) umfasst und die eine Federeinfassungsnetzhalterung (40) aufweist; wobei ein Trampolineinfassungsnetz (52) von der Federeinfassungsnetzhalterung (40) gehalten wird, wobei die Federeinfassungsnetzhalterung (40) wie eine Blattfeder (41) geformt ist und als Halterung für die Trampolinstangen (32) dient, um die Trampolinstangen (32) an deren oberen Enden zu verbinden, wobei die Blattfeder (41) in einer horizontalen Richtung und in einer vertikalen Richtung flexibel ist, wobei eine Blattfeder-Vertikalabmessung (141) größer ist, als eine Blattfeder-Horizontalabmessung (142), wobei die Blattfeder (41) als länglicher Streifen geformt ist; und
d. eine Einfassungsmuffe (64) der Trampolineinfassung (3), wobei das Trampolineinfassungsnetz (52) an der Einfassungsmuffe (64) aufgehängt ist.

2. Das Trampolin mit Federeinfassung (9) gemäß Anspruch 1, wobei die Blattfeder (41) aus mehreren Abschnitten, die an einem Blattfederverbinder (143) miteinander verbunden sind, besteht.

3. Das Trampolin mit Federeinfassung (9) gemäß Anspruch 1 oder 2, wobei die Blattfeder (41) ein Paar Blattfederöffnungen aufweist, die Bolzen aufnehmen, wobei das Paar Blattfederöffnungen eine erste Blattfederöffnung (144) und eine zweite Blattfederöffnung (145) umfasst.

4. Das Trampolin mit Federeinfassung (9) gemäß einem der vorangehenden Ansprüche, wobei die Blattfeder (41) eine Blattfederabdeckung (60) umfasst, die mindestens eine obere Kante der Blattfeder (41) abdeckt.

5. Das Trampolin mit Federeinfassung (9) gemäß einem der vorangehenden Ansprüche, ferner mit einer Blattfederhalterung (62), die an einer der Trampolinstangen (32) befestigt ist, wobei die Blattfederhalterung (62) einen Halteschlitz (63) aufweist, der die Blattfeder (41) festklemmt, um die Drehung der Blattfeder (41) innerhalb des Halteschlitzes (63) einzugrenzen.

6. Das Trampolin mit Federeinfassung (9) gemäß einem der Ansprüche 1 bis 3 und 5, ferner mit einer Blattfederabdeckung (60), die auf mindestens einen Abschnitt der Blattfeder (41) laminiert ist.

7. Das Trampolin mit Federeinfassung (9), gemäß einem der vorangehenden Ansprüche, ferner mit einer angrenzenden Blattfeder, wobei die Blattfeder (41) einen Kopf (411) aufweist und die angrenzende Blattfeder ein Ende (412) aufweist, wobei das Ende (412) eine Verbindungsmuffe (42) aufweist, wobei die Verbindungsmuffe (42) eine Schnalle (43) aufweist, um die Verbindungsmuffe (42) lösbar mit der Schnalle (43) an der angrenzenden Blattfeder festzuschnallen.

8. Das Trampolin mit Federeinfassung (9), gemäß Anspruch 7, wobei die Schnalle (43) als eine Drahtklemme gebildet ist.

9. Das Trampolin mit Federeinfassung (9), gemäß Anspruch 7 oder 8, wobei die Schnalle (43) ein Paar Klemmteile (432) aufweist, die einen oberen Klemmteil und einen unteren Klemmteil aufweisen, wobei das Paar Klemmteile (432) in ein paar Einschnitte (415), die an einem Kopfabschnitt der angrenzenden Blattfeder gebildet sind, eingreift, wobei das obere Klemmteil (432) in einen oberen Einschnitt (415) eingreift und das untere Klemmteil (432) in einen unteren Einschnitt (415) eingreift.

10. Das Trampolin mit Federeinfassung (9), gemäß einem der Ansprüche 7 bis 9, wobei die Verbindungsmuffe (42) mit dem Ende der angrenzenden Blattfeder (412) mittels eines Bolzens oder einer Schraube (44) verbunden ist.

11. Das Trampolin mit Federeinfassung (9), gemäß einem der Ansprüche 7 bis 10, wobei die Blattfeder (41) zudem ein Paar Abschrägungen umfasst, die an dem Ende (412) der Blattfeder (41) gebildet sind, wobei die Abschrägungen konfiguriert sind, um die Schnalle (43) auseinanderziehen, wenn das Paar Abschrägungen durch die Schnalle (43) eingesteckt werden.

## Revendications

1. Trampoline à enceinte à ressorts (9) comprenant :
a. un tapis de trampoline (15) relié à travers un élément de cadre horizontal (30), dans lequel le tapis de trampoline (15) est soutenu par une pluralité de ressorts ;
b. des pieds de trampoline (54) soutenant l'élément de cadre horizontal (30) au-dessus d'une surface de sol ;
c. une enceinte de trampoline (3) entourant le tapis de trampoline (15) et ayant un support de filet à enceinte à ressorts (40) ; un filet d'enceinte de trampoline (52) est soutenu par le support de filet à enceinte à ressorts (40), dans lequel le support de filet à enceinte à ressorts (40) est formé comme un ressort à lames (41) fournissant un maintien aux pôles de trampoline (32) de façon à interconnecter les pôles de trampoline (32) au niveau des extrémités supérieures des pôles de trampoline, dans lequel le ressort à lames (41) est flexible dans une direction horizontale et dans une direction verticale, dans lequel une dimension verticale de ressort à lames (141) est supérieure à une dimension horizontale de ressort à lames (142), dans lequel le ressort à lames (41) est formé comme une bande allongée ; et
d. un fourreau d'enceinte (64) de l'enceinte de trampoline (3), dans lequel le filet d'enceinte de trampoline (52) est suspendu à partir du fourreau d'enceinte (64).

2. Trampoline à enceinte à ressorts (9) selon la revendication 1, dans lequel le ressort à lames (41) est formé à partir de multiples sections reliées entre elles au niveau d'un connecteur de ressort à lames (143).

3. Trampoline à enceinte à ressorts (9) selon la revendication 1 ou 2, dans lequel le ressort à lames (41) a une paire d'ouvertures de ressort à lames (41) recevant les boulons, la paire d'ouvertures de ressort à lames (41) comprenant une première ouverture de ressort à lames (144) et une seconde ouverture de ressort à lames (145).

4. Trampoline à enceinte à ressorts (9) selon l'une quelconque des revendications précédentes, dans lequel le ressort à lames (41) a un cache de ressort à lames (60) ajusté sur au moins une arête supérieure du ressort à lames (41).

5. Trampoline à enceinte à ressorts (9) selon l'une quelconque des revendications précédentes, comprenant en outre un système de retenue de ressort à lames (62) fixé au l'un des pôles (32) de trampoline, dans lequel le système de retenue de ressort à lames (62) a une fente de système de retenue (63) accrochant le ressort à lames (41) de façon à limiter la rotation du ressort à lames (41) à l'intérieur de la fente de système de retenue (63).

6. Trampoline à enceinte à ressorts (9) selon l'une quelconque des revendications 1 à 3 et 5, comprenant en outre un cache de ressort à lames (60) laminé au-dessus d'au moins une partie du ressort à lames (41).

7. Trampoline à enceinte à ressorts (9) selon l'une quelconque des revendications précédentes, comprenant en outre un ressort à lames adjacent, dans lequel le ressort à lames (41) a une tête (411) et le ressort à lames adjacent a une extrémité (412), dans lequel l'extrémité (412) a un fourreau de connexion (42), dans lequel le fourreau de connexion (42) a une boucle (43), le fourreau de connexion (42) pouvant être attaché de façon amovible au ressort à lames adjacent via la boucle (43).

8. Trampoline à enceinte à ressorts (9) selon la revendication 7, dans lequel la boucle (43) est formée comme un serre-câble.

9. Trampoline à enceinte à ressorts (9) selon les revendications 7 à 8, dans lequel la boucle (43) a une paire de parties de serrage (432), comprenant une partie de serrage supérieure et une partie de serrage inférieure, dans lequel la paire de parties de serrage (432) emboîte une paire de rainures (415) formées sur une partie de tête (411) du ressort à lames adjacent, dans lequel la partie de serrage supérieure (432) emboîte une rainure supérieure (415) et dans lequel la partie de serrage inférieure (432) emboîte une rainure inférieure (415).

10. Trampoline à enceinte à ressorts (9) selon les revendications 7 à 9, dans lequel le fourreau de connexion (42) est relié à l'extrémité (412) du ressort à lames adjacent par un boulon ou une vis (44).

11. Trampoline à enceinte à ressorts (9) selon les revendications 7 à 10, dans lequel le ressort à lames (41) comprend également une paire de chanfreins formés sur l'extrémité (412) du ressort à lames (41), dans lequel les chanfreins sont configurés pour étendre la boucle (43) lorsque la paire de chanfreins est insérée à travers la boucle (43).
